# EUROPÄISCHE PATENTSCHRIFT

(11) **EP 2 192 336 B1**
(45) Veröffentlichungstag und Bekanntmachung des Hinweises auf die Patenterteilung: **06.06.2012**
(21) Anmeldenummer: 08170136.9
(22) Anmeldetag: 27.11.2008
(51) Int. Cl.: F16K 31/06

(54) **Ventil**
Valve
Soupape

(43) Veröffentlichungstag der Anmeldung: 02.06.2010
(73) Patentinhaber: Innovatherm Prof. Dr. Leisenberg GmbH & Co. KG, 35510 Butzbach (DE)
(72) Erfinder: Uhrig,Wolfgang, 35321 Laubach (DE)
(74) Vertreter: Tappe, Hartmut

(56) Entgegenhaltungen:
- EP-A- 0 380 754
- WO-A-2007/088043
- DE-C1- 4 401 215
- DE-U1- 20 012 614

## Beschreibung

Die Erfindung betrifft ein Ventil, insbesondere für Gase, mit dem Merkmalen des Oberbegriff des Anspruchs 1.

Derartige, aus dem Stand der Technik bekannte druckentlastete Ventile werden regelmäßig als so genannte Sicherheitsventile für gasförmige Medien verwendet. Insbesondere weisen diese Ventile eine Leitung auf, die eine der Kammern mit einem Wirkraum eines Kolbens mediendurchlässig verbindet und so alle Wirkräume des Kolbens einer Kammer zuordnet. Die so erzielbare Druckentlastung des Kolbens ermöglicht es den Kolben in eine Absperrstellung zu verbringen, wenn ein Antrieb des Kolbens bzw. eine Steuereinrichtung des Ventils ausfällt. Dazu werden die bekannten Ventile mit einem längsbeweglichen, federbelasteten Kolben ausgebildet, der in einer Ruhestellung aufgrund einer am Kolben vorgesehenen Feder einen Ventilsitz unabhängig von einem Gasdruck abdichtet. Insbesondere bei einer Verwendung derartiger Ventile für Gase sind die Anforderungen hinsichtlich Dichtigkeit des Ventils, insbesondere des Ventilsitzes und der übrigen im Ventil angeordneten Dichtungen besonders hoch. Da der längsbewegliche Kolben in einer Führung gelagert ist, bedarf es zur druckentlasteten Ausbildung des Ventils einer Abdichtung zwischen Kolben und Kolbenführung. Die Abdichtung wird regelmäßig dadurch erzeugt, dass in einer Umfangsfläche des Kolbens oder alternativ in einer Innenfläche der Kolbenführung eine umlaufende Nut zur Aufnahme eines Dichtungsrings ausgebildet wird. Um eine unnötig hohe Druckbelastung der so ausgebildeten Dichtung zu vermeiden, ist die Dichtung häufig so am Kolben angeordnet, dass zwischen der Dichtung und einer mit Druck beaufschlagten Kammer ein Druckgefälle infolge der konstruktiven Ausbildung der Kolbenführung entsteht.

Da insbesondere bei für Gasen vorgesehenen, derartigen Ventilen nur relativ kurze Kolbenhübe für einen ausreichenden Gasdurchfluss notwendig sind, können diese Ventile mit vergleichsweise hohen Schaltfrequenzen betrieben werden. Nachteilig ist hier jedoch, dass sich nach einer Anzahl von Schaltzyklen Materialpartikel im Bereich der vorbeschriebenen Kolbendichtung ansammeln, die einen Verschleiß der Dichtung befördern und so deren Dichtheit merklich verschlechtern. Dieser nachteilige Effekt tritt dann besonders schnell in Erscheinung, wenn als ein Medium reine Gase verwendet werden, da diese gegenüber beispielsweise geölter Druckluft keine Bestandteile enthalten, die zu einer Schmierung der Kolbenführung beitragen. Unabhängig von der Art des verwendeten Mediums erfolgt jedoch immer ein Verschleiß derartiger Kolbendichtungen nach einer bestimmten Anzahl Schaltzyklen. Ein weiteres Problem betrifft die durch eine derartige Kolbendichtung bewirkten Reibungskräfte zwischen Kolben und Kolbenführung, hervorgerufen durch die notwendigerweise dichte Anlage des Dichtungsrings. Aufgrund der demnach verschlechterten Reibeigenschaften des Kolbens bzw. der Kolbenführung sind gegenüber einem ungedichteten Kolben geringere Kolbengeschwindigkeiten und somit Schaltfrequenzen erzielbar. Die druckunabhängige Ausbildung des Ventils verschlechtert demzufolge die dynamischen Schalteigenschaften des Ventils.

Aus der DE 44 01 215 C1 ist ein Ventil mit einem druckentlasteten Kolben und einem elektromagnetischen Antrieb bekannt, wobei eine Kolbendichtung vorgesehen ist, die in einer Absperrstellung des Kolbens eine Dichtkraft bewirkt, die größer ist als in einer Öffnungsstellung des Kolbens. Dazu wird eine O-Ringdichtung, welche in einer Ringnut am Kolben gehaltert ist, in einen Dichtungssitz einer Kolbenführungseinrichtung bewegt, wobei jeweils der Kolben und die Kolbenführungseinrichtung bzw. der Dichtungssitz eine radiale Anlagefläche für das Dichtelement ausbilden.

Die WO 2007/088043 A1 offenbart ein Ventil mit einem Dichtelement zwischen einem Kolben und einer Kolbenführungseinrichtung, welches in der Kolbenführungseinrichtung gehaltert ist und eine radiale Dichtlippe aufweist. Der Kolben ist abschnittsweise konisch ausgebildet, sodass in einer Schließstellung des Kolbens zwischen radialen Anlageflächen des Dichtelements eine Dichtkraft bewirkt wird.

Die EP 0 380 754 A2 zeigt ein Ventil mit einem Kolben und einer Ringdichtung, welche auf einer axialen Dichtfläche des Kolbens in einer Absperrstellung anliegt. Die Ringdichtung ist so ausgebildet und gehaltert, dass alleine axiale Dichtkräfte bewirkt werden.

Der vorliegenden Erfindung liegt die Aufgabe zugrunde, ein Ventil vorzuschlagen, welches einen Verschleiß einer Kolbenabdichtung vermeidet und dennoch eine hohe Anzahl Schaltzyklen ermöglicht.

Diese Aufgabe wird durch ein Ventil mit den Merkmalen des Anspruchs 1 gelöst.

Das erfindungsgemäße Ventil, insbesondere für Gase, weist ein Ventilgehäuse und einen im Ventilgehäuse angeordneten verschiebbaren Kolben auf, wobei der Kolben so gegenüber einem Ventilsitz des Ventilgehäuses bewegbar ist, dass zwei Kammern gegeneinander absperrbar sind, wobei einer Kammer eine Leitung zugeordnet ist, die zwei Wirkräume des Kolbens dauernd verbindet, wobei die Wirkräume so ausgebildet sind, dass der Kolben druckentlastet ist, wobei zwischen dem Kolben und einer Kolbenführungseinrichtung eine Kolbendichteinrichtung zur Abdichtung der Kammern ausgebildet ist, und wobei die Kolbendichteinrichtung als eine dynamische Kolbendichteinrichtung ausgebildet ist, derart, dass in einer Absperrstellung des Kolbens eine Dichtkraft größer ist als in einer Öffnungsstellung.

Insbesondere dadurch, dass die dynamische Kolbendichteinrichtung in der Absperrstellung des Kolbens die dann maximal erforderliche Dichtkraft ausbildet, ist der Vorteil erzielbar, dass die Kolbendichteinrichtung in einer von der Absperrstellung abweichenden Stellung des Kolbens, also in einer Öffnungsstellung, eine geringere Beanspruchung erfährt. Hieraus resultiert ein geringerer Verschleiß der Kolbendichteinrichtung was eine hohe Anzahl Schaltzyklen mit der erforderlichen Dichtigkeit des Ventils ermöglicht. Auch ist aufgrund der erhöhten Dichtkraft der dynamischen Kolbendichteinrichtung in der Absperrstellung des Kolbens eine Abdichtung zwischen dem Kolben und der Kolbenführungseinrichtung besonders dicht. Dies ist insofern vorteilhaft, da gegenüber der Öffnungsstellung in der Absperrstellung des Kolbens die dynamische Kolbendichteinrichtung mit dem maximalen Mediendruck einer der beiden Kammern beaufschlagt wird. Ergänzend sei bemerkt, dass die vorteilhafte, erfindungsgemäße Ausbildung des Ventils mit einer dynamischen Kolbendichteinrichtung nicht ausschließlich auf Ventile für gasförmige Medien beschränkt ist. So sind beispielsweise auch in Verbindung mit flüssigen Medien verbesserte Dichteigenschaften erzielbar.

Weiter bilden erfindungsgemäβ der Kolben und die Kolbenführungseinrichtung jeweils radiale Anlageflächen für das Dichtelement aus, wobei bei einer Bewegung des Kolbens von der Absperrstellung zu der Öffnungsstellung eine Reibung des Dichtelements an den Anlageflächen abnimmt. Eine Abnahme der Reibung während einer Kolbenbewegung ermöglicht eine Erhöhung einer Kolbengeschwindigkeit und somit eine höhere Anzahl Schaltzyklen des Ventils innerhalb eines Zeitabschnitts.

Der Kolben und die Kolbenführungseinrichtung bilden erfindungsgemäβ jeweils axiale Anlageflächen für das Dichtelement aus, derart, dass auf das Dichtelement über die axialen Anlageflächen in der Absperrstellung des Kolbens eine Druckkraft ausgeübt wird, wobei jeweils die radialen Anlageflächen relativ zveinander und die axialen Anlageflächen relativ zveinander parallel ausgebildet sind. Da in von der Absperrstellung des Kolbens abweichenden Schaltzuständen nicht zwangsläufig erhöhte Druckkräfte und somit eine erhöhte Dichtigkeit der Kolbendichteinrichtung für eine ordnungsgemäß Funktion des Ventils zur Verfügung gestellt werden muss, ermöglicht diese Art der Kolbenabdichtung eine Reduzierung möglicher Druckkräfte auf die in der jeweiligen Kolbenstellung notwendige Größe.

Weiter kann die Kolbendichteinrichtung ein elastisches Dichtelement aufweisen, welches in einen zwischen dem Kolben der Kolbenführungseinrichtung ausgebildeten konzentrischen Spalt eingesetzt ist. Ein elastisches Dichtelement, beispielsweise eine Gummidichtung, kann eine besonders gute Anpassung an Anlageflächen des Kolbens und der Kolbenführungseinrichtung ermöglichen, so dass eine hohe Dichtigkeit der Kolbendichteinrichtung erzielbar ist.

Neben einer Abdichtung in einer Absperrstellung ist es vorteilhaft, wenn das Dichtelement unabhängig von einer Stellung des Kolbens den Spalt überbrücken kann. So kann bei jeder beliebigen Stellung des Kolbens eine ausreichende Abdichtung des Spalts erzielt werden.

Eine besonders hohe Dichtigkeit des Ventils in der Absperrstellung bzw. der Kolbenführung ist erzielbar, wenn in der Absperrstellung des Kolbens Kontaktflächen des Dichtelements mit den Anlageflächen größer sind, als in der Öffnungsstellung.

Weist die Kolbendichteinrichtung ein in Längsrichtung des Kolbens wirkendes Federelement auf, mittels dessen auf das Dichtelement eine Druckkraft ausübbar ist, können in der Absperrstellung des Kolbens Abstimmungstoleranzen zwischen dem Kolben und dem Ventilsitz vorteilhaft ausgeglichen werden. So kann auf eine besonders aufwendige Abstimmung der Kolbendichteinrichtung auf den Ventilsitz, zur Gewähr-leistung einer in Absperrstellung vollständigen Dichtungswirkung, jeweils der Kolbendichteinrichtung und des Ventilsitzes, verzichtet werden. Das Federelement kann beispielsweise ein Weichgummi oder eine Feder sein oder auch aus mehreren Elementen ausgebildet sein.

Ist das Dichtelement ein O-Ring, kann die Kolbendichteinrichtung einfach und kostengünstig hergestellt werden.

Die Kolbendichteinrichtung kann auch in einem dem Ventilsitz zugewandten Endbereich des Kolbens bzw. der Kolbenführungseinrichtung angeordnet sein, da aufgrund der guten Dichtungswirkung der Kolbendichteinrichtung keine Notwendigkeit einer Ausbildung einer Labyrinthdichtung, beispielsweise in Art eines langen Spaltes, besteht. Somit kann die Kolbendichteinrichtung auch besonders gut zugänglich und einfach montierbar im Ventil angeordnet werden.

Die Leitung zur Verbindung der beiden Wirkräume des Kolbens kann im Kolben ausgebildet sein, beispielsweise in Art einer Durchgangbohrung in Längsrichtung des Kolbens. Die Leitung ist so besonders einfach herstellbar.

In einer weiteren Ausführungsform kann die Leitung im Ventilgehäuse ausgebildet sein. Die Leitung ist demnach unabhängig von einer Gestalt des Kolbens.

Auch ist es vorteilhaft wenn das Ventil eine Feder aufweist, mittels der der Kolben in einer Stellung positionierbar ist. Im Falle eines Ausfalls einer Kolbensteuerung bzw. Betätigungseinrichtung des Kolbens kann der Kolben dann mittels der Feder in die Absperrstellung bewegt werden. Je nach gewünschter Funktion des so ausgebildeten Sicherheitsventils kann auch umgekehrt eine Bewegung des Kolbens in die Öffnungsstellung vorgesehen sein.

Das Ventil kann als ein Magnetventil ausgebildet werden, wenn das Ventil einen Elektromagneten aufweist, mittels dem der Kolben betätigbar ist.

Wenn zwischen dem Kolben und dem Ventilsitz eine Ventildichteinrichtung ausgebildet ist, kann in der Absperrstellung eine gute Abdichtung der beiden Kammern erzielt werden. Die Ventildichteinrichtung kann aus einem elastischen Werkstoff bestehen, wie beispielsweise Gummi, und als Scheibe oder Ring ausgebildet sein. Weiter kann die Ventileinrichtung am Kolben oder am Ventilsitz befestigt sein.

Zur Erzielung einer vorteilhaften Druckentlastung des Ventils können die Kolbendichteinrichtung und die Ventildichteinrichtung so angeordnet sein, dass den Wirkräumen zugehörige Wirkflächen des Kolbens im Wesentlichen gleich groß sind. Das Ventil kann dann wahlweise von der einen oder der anderen Kammer mit einem Mediendruck beaufschlagt werden. Auch können die Wirkflächen so bemessen sein, dass eine Rückstellkraft einer Feder zur Positionierung des Kolbens zumindest teilweise berücksichtigt wird.

Ein modulhafter Aufbau des Ventils wird möglich, wenn das Ventil eine in das Ventilgehäuse einsetzbare Betätigungsvorrichtung aufweist, die die Kolbenführungseinrichtung ausbildet und den Kolben bewegbar haltert. Die Kolbenführungseinrichtung kann dann zusammen mit dem Kolben in das Ventilgehäuse eingesetzt bzw. aus dem Ventilgehäuse entfernt werden, ohne dass eine Demontage des Ventilgehäuses mit Medienleitungen notwendig ist. Im Falle eines Defekts des Ventils bedarf es daher lediglich eines Austausches der Betätigungsvorrichtung und nicht des gesamten Ventils.

Nachfolgend wird eine bevorzugte Ausführungsform der Erfindung unter Bezugnahme auf die beigefügte Zeichnung näher erläutert.

Es zeigen:
- **Fig. 1**: eine Ausführungsform des Ventils in einer Schnittansicht;
- **Fig. 2**: eine vergrößerte Detailansicht gemäß Ausschnitt 1 aus **Fig. 1** in einer Absperrstellung eines Kolbens;
- **Fig. 3**: eine vergrößerte Detailansicht gemäß Ausschnitt I aus **Fig. 1** in einer Öffnungsstellung des Kolbens.

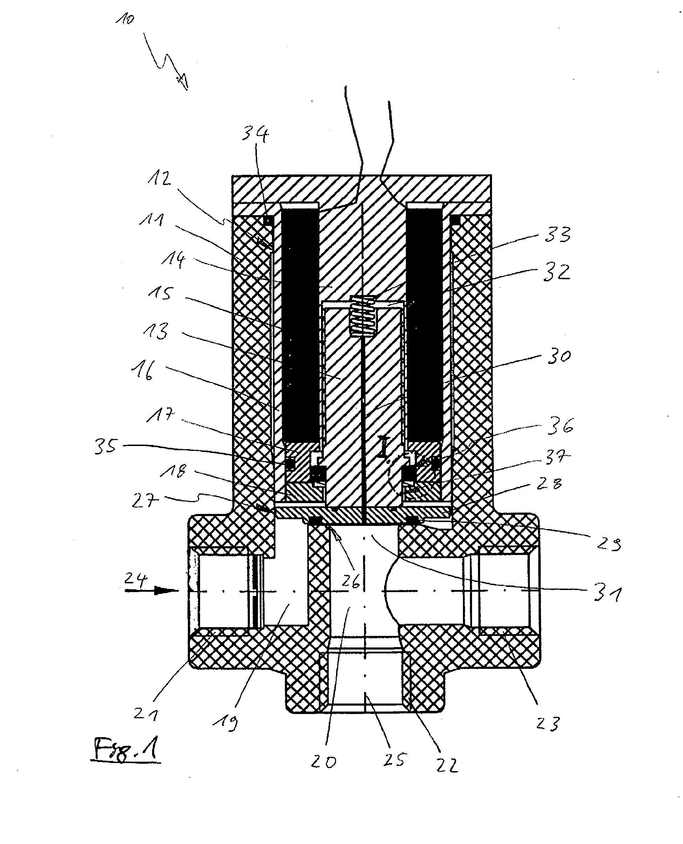

**Fig. 1** zeigt ein Ventil 10 mit einem Ventilgehäuse 11 und einer Betätigungsvorrichtung 12. Die Betätigungsvorrichtung 12 umfasst einen Kolben 13, eine hülsenartig ausgebildete Kolbenführungseinrichtung 14 zur längsbeweglichen Aufnahme des Kolbens 13 und einer Elektromagnetspule 15 sowie eine weitere, die Elektromagnetspule 15 abdeckende Hülse 16. Weiter sind ringförmige Dichtbuchsen 17 und 18 vorgesehen, welche die Hülse 16 bzw. die Kolbenführungseinrichtung 14 verschließen und den Kolben 13 koaxial umgreifen. Das Ventilgehäuse 11 bildet eine erste Kammer 19 und eine zweiter Kammer 20 aus, die Anschlussgewinde 21 bzw. 22 und 23 zum Anschluss hier nicht gezeigter Medienleitungen aufweisen. In dem Ausführungsbeispiel ist eine mit einem Pfeil 24 gekennzeichnete, bevorzugte Durchflussrichtung eines Mediums von der Kammer 19 zur Kammer 20 vorgesehen. Grundsätzlich ist jedoch auch ein von der jeweiligen Anwendung und einer statischen Druckhöhe eines Mediums abhängiger Durchfluss des Mediums in umgekehrter Richtung möglich. Koaxial zu einer Längsachse 25 des Ventilgehäuses 11 ist im Ventilgehäuse 11 ein Ventilsitz 26 ausgebildet. Der Ventilsitz 26 ist mittels einer Ventildichteinrichtung 27 verschließbar. Die Ventildichteinrichtung ist aus einer Scheibe 28 mit einem Dichtring 29 zur Abdichtung des Ventilsitzes 26 gebildet und am Kolben 13 befestigt. Weiter ist im Kolben 13 und der Scheibe 28 eine, eine Leitung ausbildende Durchgangsbohrung 30 vorgesehen. Die mediendurchlässige Durchgangsbohrung 30 verbindet einen, der Kammer 20 zugeordneten und somit in der Kammer 20 befindlichen ersten Wirkraum 31 mit einem zweiten Wirkraum 32 des Kolbens 13, welcher zwischen der Kolbenführungseinrichtung 14 und dem Kolben 13 ausgebildet ist. Im zweiten Wirkraum 32 ist eine Feder 33 koaxial zur Längsachse 25 zwischen dem Kolben 13 und der Kolbenführungseinrichtung 14 angeordnet, welche eine Rückstellung des Kolbens 13 in die hier gezeigte Absperrstellung des Ventils 10 bewirkt.

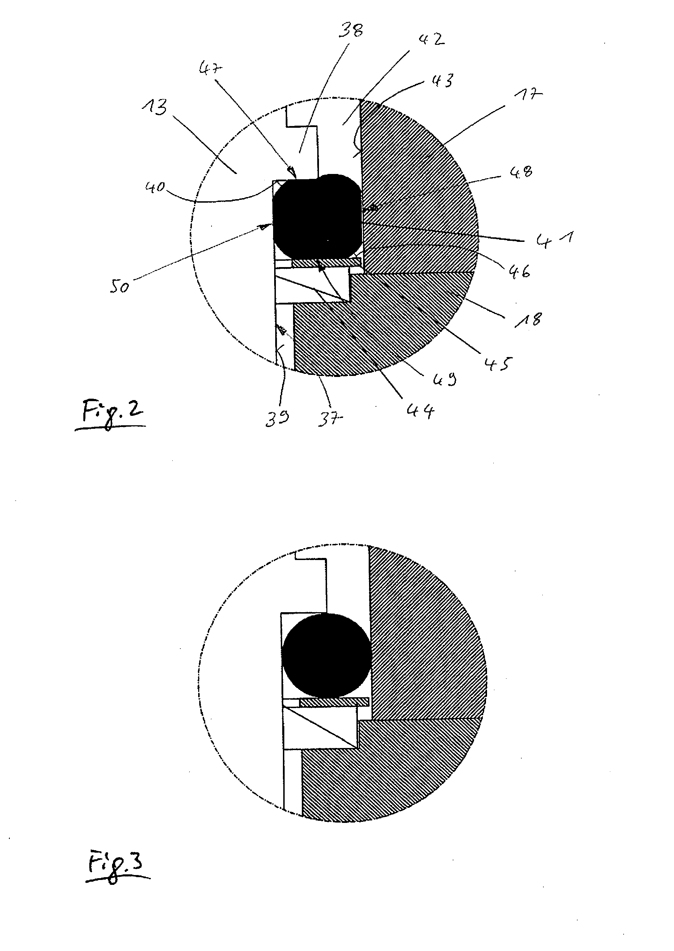

Um eine ausreichende äußere Dichtigkeit des Ventils 10 zu erzielen, weist die Betätigungsvorrichtung 12 zwischen der Hülse 16 und dem Ventilgehäuse 11 einen Dichtring 34 und zwischen der Hülse 16 und der Dichtbuchse 17 einen weiteren Dichtring 35 auf. Da aufgrund der Durchgangsbohrung 30 eine mögliche Druckdifferenz zwischen dem ersten Wirkraum 31 und dem zweiten Wirkraum 32 des Kolbens 13 im Wesentlichen immer ausgeglichen wird, ist der erste Wirkraum 31 gegenüber der Kammer 19 durch eine im Bereich der Dichtbuchsen 17 und 18 angeordnete dynamische Kolbendichteinrichtung 36 abgedichtet. Dies ist insofern notwendig, da in einer Absperrstellung zwischen der Kammer 19 und dem zweiten Wirkraum 32 die gleiche Druckdifferenz besteht, wie zwischen der Kammer 19 und der Kammer 20. Um eine hier nicht gezeigte Öffnungsstellung des Kolbens 13 zu bewirken, wird die Elektromagnetspule 15 mit Energie versorgt, was eine Bewegung des Kolbens 13 entlang der Längsachse 25 in Richtung des zweiten Wirkraums 32 gegen die Feder 33 zur Folge hat. So wird auch die Scheibe 28 mit dem Dichtring 29 vom Ventilsitz 26 abgehoben, wodurch ein Durchfluss eines Mediums von der Kammer 19 zur Kammer 20 ermöglicht wird. Der Kolben 13 wird dabei relativ zur Kolbenführungseinrichtung 14 bewegt, so dass zwischen der Kolbendichteinrichtung 36, dem Kolben 13 und der Dichtbuchse 17 ein in den **Fig. 2** und **3** näher beschriebenes Aneinandergleiten von Dichtflächen erfolgt. Fällt eine Energieversorgung der Elektromagnetspule 15 aus bzw. wird abgeschaltet, wird der Kolben 13 mittels der Feder 33 wieder in die Absperrstellung bewegt. Ein Mediendruck seitens der Kammer 19 liegt dann alleine an einer unteren Umfangsfläche 37 des Kolbens 13 an, so dass aufgrund der Verbindung der Wirkräume 31 und 32 mittels der Durchgangsbohrung 30 eine vollständige Druckentlastung des Kolbens 13 erzielbar ist.

Die **Fig. 2** und **3** zeigen jeweils in einer vergrößerten Ansicht den Kolben 13 zusammen mit den Dichtbuchsen 17 und 18 sowie der dynamischen Kolbendichteinrichtung 36 in einer Absperrstellung bzw. Öffnungsstellung. An die untere Umfangsfläche 37 des Kolbens 13 anschließend ist ein umlaufender Bund 38 am Kolben 13 ausgebildet. Die untere Umfangsfläche 37 sowie der Bund 38 bilden eine radiale Anlagefläche 39 bzw. eine axiale Anlagefläche 40 für ein als O-Ringdichtung 41 ausgebildetes Dichtelement aus. Die O-Ringdichtung 41 überbrückt einen Spalt 42 zwischen dem Kolben 13 und der Dichtbuchse 17, welche ihrerseits eine radiale Anlagefläche 43 zur Anlage der O-Ringdichtung 41 ausbildet. Die Dichtbuchse 18 weist einen Innendurchmesser auf, welcher kleiner ist als ein Außendurchmesser des Bunds 38, so dass die O-Ringdichtung 41 in der in **Fig. 2** gezeigten Absperrstellung des Kolbens 13 gegen die axiale Anlagefläche 40 des Bunds 38 gedrückt wird. Weiter ist an der Dichtbuchse 18 ein ringförmiges Federelement 44 und eine Scheibe 45 der Kolbendichteinrichtung 36 vorgesehen, welches eine Druckkraft in Richtung der Längsachse 25 auf die O-Ringdichtung 41 ausübt. Demnach bildet auch die Scheibe 45 eine axiale Anlagefläche 46 zur Anlage der O-Ringdichtung 41 aus. Eine in der Absperrstellung so auf die O-Ringdichtung 41 ausgeübte Druckkraft ist daher vergleichsweise größer als eine auf die O-Ringdichtung 41 in der in **Fig. 3** gezeigten Öffnungsstellung des Kolbens 13 einwirkende Druckkraft. Kontaktflächen 47, 48, 49 und 50 der O-Ringdichtung 41 mit den radialen Anlageflächen 39 bzw. 43 und den axialen Anlageflächen 40 bzw. 46 sind folglich in der Absperrstellung des Kolbens aufgrund der bewirkten Verformung der O-Ringdichtung 41 größer als in der Öffnungsstellung des Kolbens 13. Eine Dichtkraft bzw. Reibung der Kolbendichteinrichtung 36 ist daher in der Öffnungsstellung vergleichsweise geringer als in der Absperrstellung des Kolbens 13, so dass ein Verschleiß der Kolbendichteinrichtung 36 aufgrund der in Öffnungsstellung abnehmenden Reibkraft vorteilhaft vermindert wird. Das Federelement 44 dient dabei weiter einer Überbrückung von sich eventuell vorhandenen oder während eines Betriebs des Ventils 10 einstellenden Längendifferenzen zwischen der axialen Anlagefläche 40 und dem Ventilsitz 26. Eine sich im Laufe des Betriebs vermindernde Höhe der Ventildichteinrichtung 27 kann so mittels des Federelements 44 kompensiert werden. Weiter bewirkt das Federelement 44 eine dauerhafte Positionierung der O-Ringdichtung 41 an der axialen Anlagefläche 40.

## Patentansprüche

1. Ventil (10), insbesondere für Gase, wobei das Ventil ein Ventilgehäuse (11) und einen im Ventilgehäuse angeordneten verschiebbaren Kolben aufweist, wobei der Kolben (13) so gegenüber einem Ventilsitz (26) des Ventilgehäuses bewegbar ist, dass zwei Kammern (19, 20) gegeneinander absperrbar sind, wobei einer Kammer eine Leitung (30) zugeordnet ist, die zwei Wirkräume (31, 32) des Kolbens dauernd verbindet, wobei die Wirkräume so ausgebildet sind, dass der Kolben druckentlastet ist, wobei zwischen dem Kolben und einer Kolbenführungseinrichtung (14) eine Kolbendichteinrichtung (36) zur Abdichtung der Kammern ausgebildet ist, wobei die Kolbendichteinrichtung als eine dynamische Kolbendichteinrichtung ausgebildet ist, derart, dass in einer Absperrstellung des Kolbens eine Dichtkraft größer ist als in einer Öffnungsstellung, wobei die Kolbendichteinrichtung ein elastisches Dichtelement aufweist, welches in einen zwischen dem Kolben und der Kolbenführungseinrichtung ausgebildeten konzentrischen Spalt (42) eingesetzt ist, wobei der Kolben und die Kolbenführungseinrichtung jeweils radiale Anlageflächen (39, 43) für das Dichtelement ausbilden, und bei einer Bewegung des Kolbens von der Absperrstellung zu der Öffnungsstellung eine Reibung des Dichtelements an den Anlageflächen abnimmt,
**dadurch gekennzeichnet,**
**dass** der Kolben und die Kolbenführungseinrichtung jeweils axiale Anlageflächen (40, 46) für das Dichtelement ausbilden, derart, dass auf das Dichtelement über die axialen Anlageflächen in der Absperrstellung des Kolbens eine Druckkraft ausgeübt wird, wobei jeweils die radialen Anlageflächen relativ zueinander und die axialen Anlageflächen relativ zueinander parallel ausgebildet sind.

2. Ventil nach Anspruch 1,
**dadurch gekennzeichnet,**
**dass** das Dichtelement unabhängig von einer Stellung des Kolbens (13) den Spalt (42) überbrückt.

3. Ventil nach Anspruch 1 oder 2,
**dadurch gekennzeichnet,**
**dass** in der Absperrstellung des Kolbens (13) Kontaktflächen (47, 48, 49, 50) des Dichtelements mit den Anlageflächen (39, 40, 43, 46) größer sind, als in der Öffnungsstellung.

4. Ventil nach einem der vorangehenden Ansprüche,
**dadurch gekennzeiehnet**,
dass die Kolbendichteinrichtung (36) ein in Längsrichtung des Kolbens (13) wirkendes Federelement (44) aufweist, mittels dessen auf das Dichtelement eine Druckkraft ausübbar ist.

5. Ventil nach einem der vorangehenden Ansprüche,
**dadurch gekennzeichnet,**
**dass** das Dichtelement ein O-Ring (41) ist.

6. Ventil nach einem der vorangehenden Ansprüche,
**dadurch gekennzeichnet,**
**dass** die Kolbendichteinrichtung (36) in einem dem Ventilsitz (26) zugewandten Endbereich des Kolbens (13) bzw. der Kolbenführungseinrichtung (14) angeordnet ist.

7. Ventil nach einem der vorangehenden Ansprüche,
**dadurch gekennzeichnet,**
**dass** die Leitung (30) im Kolben (13) ausgebildet ist.

8. Ventil nach einem der Ansprüche 1 bis 6,
**dadurch gekennzeichnet,**
**dass** die Leitung im Ventilgehäuse ausgebildet ist.

9. Ventil nach einem der vorangehenden Ansprüche,
**dadurch gekennzeichnet,**
**dass** das Ventil (10) eine Feder (33) aufweist, mittels der der Kolben (13) in einer Stellung positionierbar ist.

10. Ventil nach einem der vorangehenden Ansprüche,
**dadurch gekennzeichnet,**
**dass** das Ventil (10) einen Elektromagneten aufweist, mittels dem der Kolben (13) betätigbar ist.

11. Ventil nach einem der vorangehenden Ansprüche,
**dadurch gekennzeichnet,**
**dass** zwischen dem Kolben (13) und dem Ventilsitz (26) eine Ventil-dichteinrichtung (27) ausgebildet ist.

12. Ventil nach Anspruch 11,
**dadurch gekennzeichnet,**
**dass** die Kolbendichteinrichtung (36) und die Ventildichteinrichtung (27) so angeordnet sind, dass den Wirkräumen (31, 32) zugehörige Wirkflächen des Kolbens im Wesentlichen gleich groß sind.

13. Ventil nach einem der vorangehenden Ansprüche,
**dadurch gekennzeichnet,**
**dass** das Ventil (10) eine in das Ventilgehäuse (11) einsetzbare Betätigungsvorrichtung (12) aufweist, die die Kolbenführungseinrichtung (14) ausbildet und den Kolben (13) bewegbar haltert.

## Claims

1. A valve (10), in particular for gases, wherein the valve has a valve housing (11) and a displaceable piston arranged in the valve housing, wherein the piston (13) can be moved with respect to a valve seat (26) of the valve housing in such a manner that two chambers (19, 20) can be shut off from each other, wherein one chamber is assigned a line (30) which permanently connects two effective spaces (31, 32) of the piston, wherein the effective spaces are configured in such a manner that the piston is depressurised, wherein a piston sealing means (36) for sealing the chambers is formed between the piston and a piston guiding means (14), wherein the piston sealing means is configured as a dynamic piston sealing means in such a manner that a sealing force is greater in a shut-off position of the piston than in an open position, wherein the piston sealing means has an elastic sealing element, which is inserted into a concentric gap (42) formed between the piston and the piston guiding means, wherein the piston and the piston guiding means each form radial bearing faces (39, 43) for the sealing element, and friction of the sealing element against the bearing faces is reduced when the piston moves from the shut-off position to the open position,
**characterised in that**
the piston and the piston guiding means each form axial bearing faces (40, 46) for the sealing element in such a manner that a compressive force is exerted on the sealing element via the axial bearing faces when the piston is in the shut-off position, wherein the radial bearing faces and the axial bearing faces are in each case formed parallel to each other.

2. The valve according to Claim 1,
**characterised in that**
the sealing element bridges the gap (42) irrespective of the position of the piston (13).

3. The valve according to Claim 1 or 2,
**characterised in that**
contact faces (47, 48, 49, 50) of the sealing element with the bearing faces (39, 40, 43, 46) are larger when the piston (13) is in the shut-off position than in the open position.

4. The valve according to one of the preceding claims,
**characterised in that**
the piston sealing means (36) has a spring element (44) which acts in the longitudinal direction of the piston (13), by means of which a compressive force can be exerted on the sealing element.

5. The valve according to one of the preceding claims,
**characterised in that**
the sealing element is an O-ring (41).

6. The valve according to one of the preceding claims,
**characterised in that**
the piston sealing means (36) is arranged in an end region of the piston (13) or piston guiding means (14) which faces the valve seat (26).

7. The valve according to one of the preceding claims,
**characterised in that**
the line (30) is formed in the piston (13).

8. The valve according to one of Claims 1 to 6,
**characterised in that**
the line is formed in the valve housing.

9. The valve according to one of the preceding claims,
**characterised in that**
the valve (10) has a spring (33), by means of which the piston (13) can be put in a position.

10. The valve according to one of the preceding claims,
**characterised in that**
the valve (10) has an electromagnet, by means of which the piston (13) can be actuated.

11. The valve according to one of the preceding claims,
**characterised in that**
a valve sealing means (27) is formed between the piston (13) and the valve seat (26).

12. The valve according to Claim 11,
**characterised in that**
the piston sealing means (36) and the valve sealing means (27) are arranged in such a manner that effective faces of the piston which are associated with the effective spaces (31, 32) are of essentially equal size.

13. The valve according to one of the preceding claims,
**characterised in that**
the valve (10) has an actuation device (12) which can be inserted into the valve housing (11), forms the piston guiding means (14) and holds the piston (13) in a movable manner.

## Revendications

1. Soupape (10), en particulier pour des gaz, la soupape présentant une cage de soupape (11) et un piston disposé dans la cage de soupape et pouvant être déplacé, sachant que le piston (13) est ainsi mobile vis-à-vis d'un siège de soupape (26) de la cage de soupape, que deux chambres (19, 20) peuvent être arrêtées l'une contre l'autre, sachant qu'une chambre a un conduit (30) attribué qui relie en permanence deux espaces actifs (31, 32) du piston, sachant que les espaces actifs sont ainsi formés que le piston est détendu, sachant qu'un dispositif d'étanchéité de piston (36) est prévu pour étanchéifier les chambres entre le piston et un dispositif de guidage de piston (14), sachant que le dispositif d'étanchéité de piston est formé en tant que dispositif d'étanchéité de piston dynamique de telle manière que dans une position d'arrêt du piston, une force d'étanchéité est plus grande que dans une position d'ouverture, sachant que le dispositif d'étanchéité de piston présente un élément d'étanchéité élastique qui est intégré dans une fente concentrique (42) formée entre le piston et le dispositif de guidage de piston, sachant que le piston et le dispositif de guidage de piston forment respectivement des surfaces d'appui radiales (39, 43) pour l'élément d'étanchéité, et que lors d'un mouvement du piston de la position d'arrêt à la position d'ouverture, un frottement de l'élément d'étanchéité diminue sur les surfaces d'appui,
**caractérisée en ce que**
le piston et le dispositif de guidage de piston forment respectivement des surfaces d'appui axiales (40, 46) pour l'élément d'étanchéité, de telle manière qu'une force de compression est exercée sur l'élément d'étanchéité via les surfaces d'appui axiales, dans la position d'arrêt du piston, sachant que respectivement les surfaces d'appui radiales sont formées relativement parallèles l'une par rapport à l'autre et que les surfaces d'appui axiales sont formées relativement parallèles l'une à l'autre.

2. Soupape selon la revendication 1,
**caractérisée en ce que**
l'élément d'étanchéité comble la fente (42) indépendamment de la position du piston (13).

3. Soupape selon la revendication 1 ou 2,
**caractérisée en ce que**
dans la position d'arrêt du piston (13), des surfaces de contact (47, 48, 49, 50) de l'élément d'étanchéité sont plus grandes avec les surfaces d'appui (39, 40, 43, 46), que dans la position d'ouverture.

4. Soupape selon l'une des revendications précédentes,
**caractérisée en ce que**
le dispositif d'étanchéité de piston (36) présente un élément de ressort (44) agissant dans le sens longitudinal du piston (13), au moyen duquel une force de compression peut être exercée sur l'élément d'étanchéité.

5. Soupape selon l'une des revendications précédentes,
**caractérisée en ce que**
l'élément d'étanchéité est un joint torique (41).

6. Soupape selon l'une des revendications précédentes,
**caractérisée en ce que**
le dispositif d'étanchéité de piston (36) est disposé dans une zone d'extrémité du piston (13), respectivement du dispositif de guidage de piston (14), orientée en direction du siège de soupape (26).

7. Soupape selon l'une des revendications précédentes,
**caractérisée en ce que**
le conduit (30) est formé dans le piston (13).

8. Soupape selon l'une des revendications 1 à 6,
**caractérisée en ce que**
le conduit est formé dans la cage de soupape.

9. Soupape selon l'une des revendications précédentes,
**caractérisée en ce que**
la soupape (10) présente un ressort (33) au moyen duquel le piston (13) peut être positionné dans une position.

10. Soupape selon l'une des revendications précédentes,
**caractérisée en ce que**
la soupape (10) présente un électroaimant au moyen duquel le piston (13) peut être actionné.

11. Soupape selon l'une des revendications précédentes,
**caractérisé en ce qu'**
un dispositif d'étanchéité de soupape (27) est formé entre le piston (13) et le siège de soupape (26).

12. Soupape selon la revendication 11,
**caractérisée en ce que**
le dispositif d'étanchéité de piston (36) et le dispositif d'étanchéité de soupape (27) sont ainsi disposés que des surfaces actives du piston appartenant aux espaces actifs (31, 32) sont essentiellement de même dimension.

13. Soupape selon l'une des revendications précédentes,
**caractérisée en ce que**
la soupape (10) présente un dispositif d'actionnement (12) pouvant être intégré dans la cage de soupape (11), lequel forme le dispositif de guidage de piston (14) et maintient le piston (13) mobile.
